# FASCICULE DE BREVET EUROPEEN

(11) **EP 3 169 920 B1**
(45) Date de publication et mention de la délivrance du brevet: **04.07.2018**
(21) Numéro de dépôt: 15738659.0
(22) Date de dépôt: 17.07.2015
(51) Int. Cl.: F16K 17/38, A62C 37/00

(54) **VALVE DE SÉCURITÉ**
SICHERHEITSVENTIL
SAFETY VALVE

(30) Priorité: 17.07.2014 FR 1456926
(43) Date de publication de la demande: 24.05.2017
(73) Titulaire: Schrader, 25300 Pontarlier (FR)
(72) Inventeur: GRESSET, Benoit, F-39600 Arbois (FR); LONCHAMPT, Hervé, F-25300 Granges Narboz (FR); ROBERT, Sébastien, F-25000 Besancon (FR)
(74) Mandataire: Novagraaf Technologies
(86) Numéro de dépôt international: PCT/EP2015/066383
(87) Numéro de publication internationale: WO 2016/009035

(56) Documents cités:
- US-A- 4 714 233
- US-A- 5 511 576

## Description

### Domaine technique

La présente invention se rapporte à une valve de sécurité, en particulier du genre utilisée sur des canalisations ou des réservoirs de fluide sous pression et comportant des moyens sensibles à la chaleur pour libérer le fluide sous pression en cas d'incendie.

### Etat de la technique

Certains systèmes de sécurité incendie aptes à commander des fluides sont basés sur des moyens sensibles installés ponctuellement à un endroit susceptible d'être exposé à la chaleur d'un incendie. On trouve par exemple les buses de sprinkleur destinées à être montées sur des conduites d'alimentation en fluide pour l'extinction de l'incendie. Le fluide est mis sous pression dans la canalisation et agit contre un clapet maintenu fermé par une ampoule emplie d'alcool. Lors de l'incendie, l'ampoule explose sous l'effet de la pression exercée par l'alcool qui se vaporise, et libère le clapet qui permet au fluide de sortir et d'arroser l'incendie afin de l'éteindre.

On connaît également des clapets installés dans des conduits d'aération et maintenus ouverts à l'encontre d'un ressort de fermeture. Un élément sensible est maintenu dans le conduit afin de libérer le ressort et de fermer le clapet en cas d'élévation intempestive de la température dans le conduit. L'élément sensible est par exemple formé de deux éléments brasés entre eux par un alliage eutectique à basse température de fusion, par exemple à 70°C. Les deux éléments se séparent lorsque l'alliage fond et libère ainsi le clapet. Ce peut-être aussi un ressort à mémoire de forme.

On trouve également des valves de sécurité sur des réservoirs de fluide sous pression, pour libérer le fluide en cas d'incendie et ainsi limiter les risques d'explosion. De telles valves sont utilisées par exemple pour des véhicules fonctionnant au gaz combustible pour évacuer le gaz dans une zone bien définie en cas d'incendie.

D'autres exemples de valve de sécurité sont divulgués dans les documents US 4 714 233 A et US 5 511 576 A.

La plupart de ces solutions ont l'avantage d'être passives, c'est-à-dire qu'elles n'utilisent pas d'énergie extérieure pour obtenir la commande. Cependant, elles ont l'inconvénient de n'être sensibles qu'à un endroit ponctuel. En particulier dans le cas d'un réservoir de grande taille, une partie du réservoir pourrait être exposée à la chaleur tandis que l'élément sensible pourrait n'être exposé qu'à une chaleur modérée, insuffisante pour commander l'ouverture de la valve de sécurité.

L'invention vise donc à fournir une valve de sécurité à commande passive dont l'élément sensible ne soit pas limité à une sensibilité ponctuelle.

### Description de l'invention

Avec ces objectifs en vue, l'invention a pour objet une valve de sécurité pour libérer un fluide en cas d'incendie comportant un clapet dans un corps pour ouvrir ou fermer une canalisation, un premier ressort maintenu en tension à l'encontre de moyens sensibles à la chaleur pour libérer le clapet lorsque la tension est libérée par les moyens sensibles, caractérisée en ce que les moyens sensibles comportent un piston agissant sur le premier ressort, une conduite sensible étant connectée à une chambre délimitée dans le corps par le piston à l'opposé du premier ressort, la conduite et la chambre contenant un fluide de commande sous une pression prédéterminée pour que le piston maintienne le premier ressort en tension, la conduite étant en matière apte à fondre à une température prédéterminée de manière à libérer le fluide de commande en cas d'incendie autour de la conduite.

Grâce à l'invention, on réalise un circuit armé, c'est-à-dire sous pression, dont la partie sensible peut s'étendre sur une grande distance, de manière à ne pas être limitée à une sensibilité ponctuelle. L'armement du circuit est fourni par le premier ressort qui, grâce au piston, met le fluide de commande dans la conduite sous pression. Cette pression prédéterminée est donc calibrée et n'est pas déterminée par la pression du fluide à contrôler. L'action du premier ressort permet de maintenir le clapet fermé tant que le fluide de commande est en pression dans la conduite. La rupture de la conduite, sous l'effet de la chaleur qui l'a fait fondre au moins localement, libère le fluide de commande et le piston de telle sorte que le clapet n'est plus maintenu fermé. Une telle valve de sécurité permet d'absorber des variations de volume du fluide de commande tout en restant opérationnelle, que ce soit à cause de variation de température ou de microfuite.

Selon un premier mode de réalisation, le piston agit directement sur le premier ressort. Une telle construction est simple à réaliser.

Selon une disposition complémentaire, le premier ressort et la surface du piston sont dimensionnés pour que le fluide de commande dans la conduite soit à la pression prédéterminée. La pression est déterminée par le rapport entre la force du premier ressort exercée sur le piston et la surface du piston..

Selon un deuxième mode de réalisation, le piston agit sur le premier ressort par l'intermédiaire d'une coupelle et d'un deuxième ressort, la coupelle étant en butée contre un épaulement du corps pour maintenir le premier ressort en tension calibrée. On détermine ainsi de manière contrôlée la force exercée par le premier ressort sur le clapet, puisqu'on définit la position de la coupelle intermédiaire avec l'épaulement. Le comportement du clapet n'est pas influencé par la pression dans la canalisation.

Selon une caractéristique complémentaire, le deuxième ressort et le diamètre du piston sont dimensionnés pour que le fluide de commande dans la conduite sensible soit à la pression prédéterminée. Selon une caractéristique particulière, la valve de sécurité est une soupape de maintien en pression. Une soupape de maintien en pression reste fermée tant que la pression est inférieure à un seuil prédéterminé, et s'ouvre au moins partiellement lorsque la pression dépasse ledit seuil. Elle se referme lorsque la pression revient à un niveau inférieur au seuil prédéterminé. Une telle soupape assure une deuxième fonction de sécurité pour éviter un éclatement d'une installation, telle qu'un réservoir.

Dans le cas d'une valve de sécurité avec une coupelle, la coupelle comporte des moyens de réglage de la compression du premier ressort. On peut ainsi calibrer le seuil prédéterminé auquel la fonction de soupape s'active.

Selon un perfectionnement, la conduite comporte une valve de remplissage. On peut ainsi tirer au vide puis remplir la conduite et la chambre avec le fluide de commande et le mettre sous pression. La valve de remplissage peut être remplacée par d'autres moyens de fermeture de la conduite tels qu'un bouchon, un scellement ou un écrasement soudé.

Selon une caractéristique constructive, la conduite est en matière synthétique thermoplastique. Cette famille de matière est sensible à la chaleur, à un niveau de température compatible avec les exigences de sécurité.

L'invention a aussi pour objet un réservoir de fluide sous pression caractérisé en ce qu'il comporte une valve de sécurité telle que décrite précédemment, le clapet étant maintenu fermé par le premier ressort, la conduite étant disposée le long du réservoir.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en perspective d'une valve de sécurité selon un premier mode de réalisation de l'invention ;
- la figure 2 est une vue en coupe de la valve de sécurité de de la figure 1 ;
- la figure 3 est une vue du détail III de la figure 2 sans la conduite ;
- la figure 4 est une vue similaire à la figure 3, la valve de sécurité étant dans une position relâchée ;
- les figures 5 et 6 sont des vues similaires aux figures 3 et 4 d'une valve de sécurité selon un deuxième mode de réalisation de l'invention ;
- la figure 7 est une vue similaire à la figure 3 d'une valve de sécurité selon un troisième mode de réalisation de l'invention.

### Description détaillée

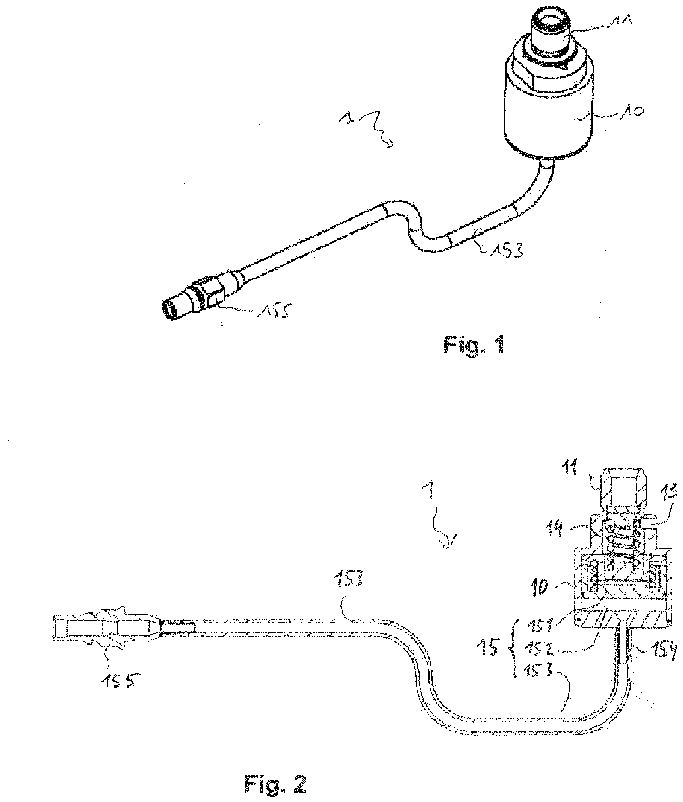

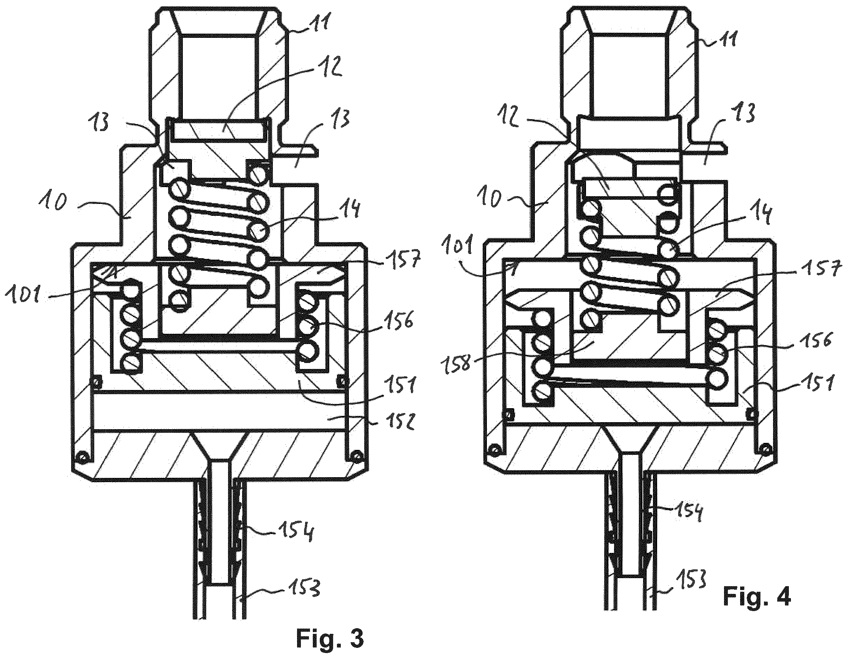

Une valve 1 de sécurité selon un premier mode de réalisation est représentée sur les figures 1 à 4. La valve 1 de sécurité permet de libérer un fluide en cas d'incendie, en l'occurrence dans l'atmosphère. Une telle valve 1 de sécurité est utilisable par exemple sur un véhicule pour un réservoir de gaz combustible tel que du GPL ou du gaz naturel. La valve 1 comporte un corps 10 destiné à être fixé par l'intermédiaire d'un embout fileté 11 sur une canalisation reliée à un réservoir ou directement sur le réservoir (non représentés) et une conduite 153 destinée à s'étendre le long du réservoir ou proche d'emplacements sujets à des départs d'incendie. La valve 1 comporte un clapet 12 dans le corps 10 pour ouvrir ou fermer la canalisation, avec une position fermée dans laquelle toute circulation de fluide dans la canalisation est arrêtée, et une position détendue dans laquelle la communication entre la canalisation et l'atmosphère est possible par des orifices de passage 13. La valve 1 comporte un premier ressort 14 logé dans le corps 10 et comprimé entre le clapet 12 et des moyens sensibles à la chaleur 15. Les moyens sensibles à la chaleur 15 comportent un piston 151 agissant sur le premier ressort 14, une chambre 152 délimitée dans le corps 10 par le piston 151 à l'opposé du premier ressort 14, la conduite 153 connectée à la chambre 152 et un fluide de commande sous pression dans la chambre 152 et la conduite 153.

La conduite 153 est connectée à un raccord 154 faisant saillie du corps 10. La conduite 153 comporte en outre une valve de remplissage 155, de manière à pouvoir remplir la conduite 153 et la chambre 152 avec le fluide de commande, et à ensuite maintenir la pression en fermant ladite valve 155. Le fluide de commande est par exemple de l'eau, mais préférentiellement, c'est un propylène-glycol.

La conduite 153 est en matière apte à fondre à une température prédéterminée de manière à libérer le fluide en cas d'incendie autour de la conduite 153. La conduite 153 est par exemple en matière synthétique thermoplastique telle que du polyéthylène, du polypropylène ou du polyamide, mais d'autres matières peuvent aussi convenir.

Les moyens sensibles à la chaleur 15 comportent en outre un deuxième ressort 156 placé entre le piston 151 et une coupelle 157, à l'opposé de la chambre 152. La coupelle 157 est interposée entre le premier et le deuxième ressort 14, 156. La course de la coupelle 157 est limitée par un épaulement 101 du corps 10 formant une butée. La coupelle 157 comporte des moyens de réglage 158 de la course du premier ressort 14. Les moyens de réglage sont, par exemple, un disque 158 fileté en périphérie se vissant au centre de la coupelle 157 et formant un siège pour le premier ressort 14.

En position fermée, la valve de sécurité 1 est telle que le clapet 12 est en appui pour fermer la communication entre la canalisation et l'atmosphère. La coupelle 157 est en appui sur l'épaulement 101 de manière à comprimer le premier ressort 14 contre le clapet 12 à une valeur prédéterminée quelle que soit la pression dans la chambre 152. La pression dans la chambre 152 maintient le piston 151 en appui sur le deuxième ressort 156 pour que la coupelle 157 soit plaquée contre l'épaulement 101. On obtient cette position dès que la pression du fluide de commande dans la conduite 153 est supérieure à 2 bars.

En cas de surpression dans la canalisation, le clapet 12 recule à l'encontre du premier ressort 14 qui se comprime, jusqu'à laisser passer le fluide de la canalisation vers l'atmosphère. On obtient ainsi la fonction d'une soupape de maintien en pression.

En cas d'incendie, la conduite 153 est soumise à la température de l'incendie et fond sous l'effet de la chaleur, libérant ainsi le fluide de commande. Le piston 151, n'étant plus soumis à la pression du fluide, est déplacé dans la chambre 152 par le ressort 156 qui se détend. Sous l'effet du premier ressort 14, la coupelle 157 quitte également l'épaulement 101. Le premier ressort 14 se détend et le clapet 12 n'est plus maintenu en place par le premier ressort 14. La pression du fluide dans la canalisation fait reculer le clapet 12 qui permet alors la communication entre la canalisation et l'atmosphère. La valve de sécurité 1 de sécurité assure alors son rôle qui est de libérer le fluide de la canalisation en cas d'incendie.

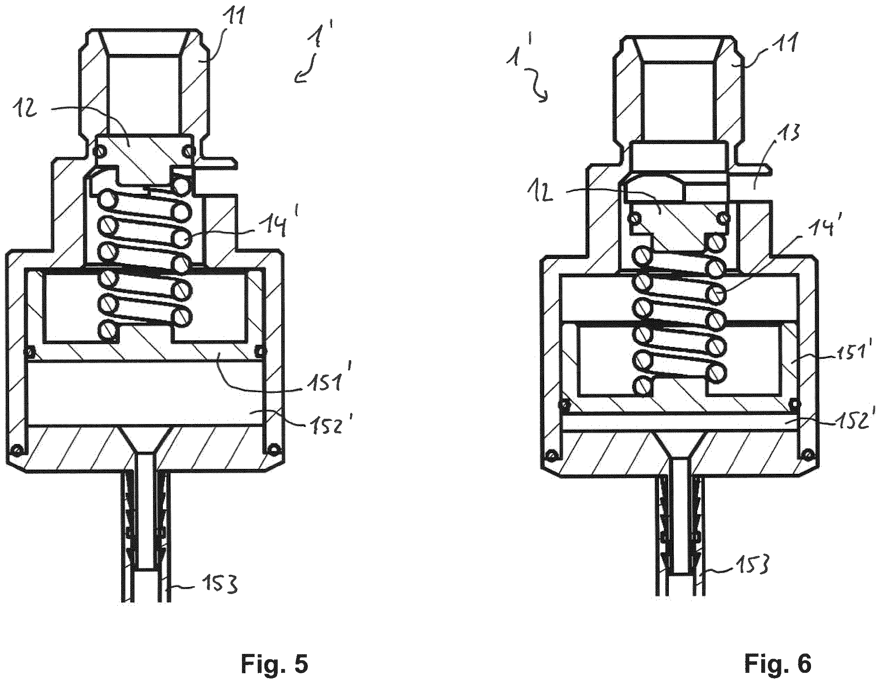

Dans un deuxième mode de réalisation d'une valve de sécurité 1' selon l'invention, montré sur la figure 5, le piston 151' agit directement sur le premier ressort 14'. Ainsi les moyens sensibles ne comportent pas de coupelle ni de deuxième ressort, contrairement au premier mode de réalisation. Dans cette version, la valve n'assure pas la fonction de régulation de pression dans le réservoir, pris en charge précédemment par le deuxième ressort 156 et la coupelle 157. Dès que la pression du fluide de commande est supérieure à 2 bars par exemple, le clapet est maintenu en position de fermeture par l'intermédiaire du premier ressort 14'. En cas d'incendie, le piston 151' libère directement le premier ressort 14'.

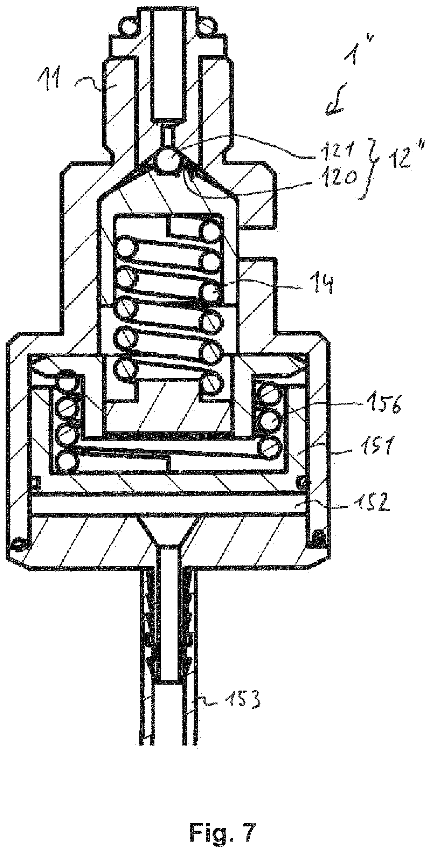

Selon un troisième mode de réalisation, montré sur la figure 7, la valve de sécurité 1" permet de libérer un fluide de la canalisation à très haute pression. Le clapet 12" se distingue du premier mode de réalisation et comporte ainsi un siège 120 de forme conique sur lequel est mise en appui une bille 121 de petit diamètre. Le fonctionnement est le même que celui du premier mode de réalisation.

Pour les trois modes de réalisation, il est possible de ne pas mettre la canalisation en communication avec l'atmosphère, mais de capter le fluide par une bague entourant le corps 10 de manière étanche autour des orifices de passage 13 en aval du clapet 12 pour le conduire à un endroit choisi.

D'autres formes de valves pourront être imaginées dans le cadre de cette invention comme revendiquée dans les revendications 1 à 10.

## Revendications

1. Valve de sécurité pour libérer un fluide en cas d'incendie comportant un clapet (12) dans un corps (10) pour ouvrir ou fermer une canalisation, un premier ressort (14) maintenu en tension à l'encontre de moyens sensibles à la chaleur (15) pour libérer le clapet (12) lorsque la tension est libérée par les moyens sensibles, **caractérisée en ce que** les moyens sensibles comportent un piston (151) agissant sur le premier ressort (14), une conduite (153) sensible étant connectée à une chambre (152) délimitée dans le corps (10) par le piston (151) à l'opposé du premier ressort (14), la conduite (153) et la chambre (152) contenant un fluide de commande sous une pression prédéterminée pour que le piston (151) maintienne le premier ressort (14) en tension, la conduite (153) étant en matière apte à fondre à une température prédéterminée de manière à libérer le fluide en cas d'incendie autour de la conduite (153).

2. Valve de sécurité selon la revendication 1, dans laquelle le piston (151) agit sur le premier ressort (14) par l'intermédiaire d'une coupelle (157) et d'un deuxième ressort (156), la coupelle (157) étant en butée contre un épaulement (101) du corps (10) pour maintenir le premier ressort (14) en tension calibrée.

3. Valve de sécurité selon la revendication 2, dans laquelle le deuxième ressort (156) est dimensionné pour que le fluide de commande dans la conduite (153) soit à la pression prédéterminée.

4. Valve selon l'une des revendications précédentes, **caractérisée en ce qu'**elle est une soupape de sécurité en pression.

5. Valve de sécurité selon la revendication 4, dans laquelle la coupelle (157) comporte des moyens de réglage (158) de la compression du premier ressort (14).

6. Valve de sécurité selon la revendication 1, dans laquelle le piston (151) agit directement sur le premier ressort (14).

7. Valve de sécurité selon la revendication 6, dans laquelle le premier ressort (14) et la surface du piston (151) sont dimensionnés pour que le fluide de commande dans la conduite (153) soit à la pression prédéterminée.

8. Valve de sécurité selon l'une des revendications précédentes, dans laquelle la conduite (153) comporte une valve de remplissage (155).

9. Valve de sécurité selon l'une des revendications précédentes, dans laquelle la conduite (153) est en matière synthétique thermoplastique.

10. Réservoir de fluide sous pression **caractérisé en ce qu'**il comporte une valve de sécurité (1) selon l'une des revendications précédentes, le clapet (12) étant maintenu fermé par le premier ressort (14), la conduite (153) étant disposée le long du réservoir.

## Patentansprüche

1. Sicherheitsventil, um im Brandfall ein Fluid freizugeben, umfassend eine Klappe (12) in einem Körper (10), um eine Rohrleitung zu öffnen oder zu schließen, eine erste Feder (14), die wärmeempfindlichen Mitteln (15) entgegen in Spannung gehalten wird, um die Klappe (12) freizugeben, wenn die Spannung von den empfindlichen Mitteln freigegeben wird, **dadurch gekennzeichnet, dass** die empfindlichen Mittel einen Kolben (151) umfassen, der auf die erste Feder (14) wirkt, wobei eine empfindliche Leitung (153) mit einer Kammer (152) verbunden ist, welche vom Kolben (151) im Körper (10) gegenüber der ersten Feder (14) begrenzt wird, wobei die Leitung (153) und die Kammer (152) ein Steuerfluid unter einem vorbestimmten Druck enthalten, sodass der Kolben (151) die erste Feder (14) in Spannung hält, wobei die Leitung (153) aus Material ist, welches in der Lage ist, bei einer vorbestimmten Temperatur zu schmelzen, um das Fluid im Brandfall um die Leitung (153) herum freizugeben.

2. Sicherheitsventil nach Anspruch 1, wobei der Kolben (151) mittels eines Tellers (157) und einer zweiten Feder (156) auf die erste Feder (14) wirkt, wobei sich der Teller (157) gegen eine Schulter (101) des Körpers (10) in Anschlag befindet, um die erste Feder (14) in kalibrierter Spannung zu halten.

3. Sicherheitsventil nach Anspruch 2, wobei die zweite Feder (156) so bemessen ist, dass sich das Steuerfluid in der Leitung (153) auf dem vorbestimmten Druck befindet.

4. Ventil nach einem der vorstehenden Ansprüche, **dadurch gekennzeichnet, dass** es ein Drucksicherheitsventil ist.

5. Sicherheitsventil nach Anspruch 4, wobei der Teller (157) Mittel zum Regeln (158) der Kompression der ersten Feder (14) umfasst.

6. Sicherheitsventil nach Anspruch 1, wobei der Kolben (151) direkt auf die erste Feder (14) wirkt.

7. Sicherheitsventil nach Anspruch 6, wobei die erste Feder (14) und die Fläche des Kolbens (151) so bemessen sind, dass sich das Steuerfluid in der Leitung (153) auf dem vorbestimmten Druck befindet.

8. Sicherheitsventil nach einem der vorstehenden Ansprüche, wobei die Leitung (153) ein Füllventil (155) umfasst.

9. Sicherheitsventil nach einem der vorstehenden Ansprüche, wobei die Leitung (153) aus thermoplastischem synthetischem Material ist.

10. Druckfluidbehälter, **dadurch gekennzeichnet, dass** er ein Sicherheitsventil (1) nach einem der vorstehenden Ansprüche umfasst, wobei die Klappe (12) von der ersten Feder (14) geschlossen gehalten wird, wobei die Leitung (153) entlang des Behälters angeordnet ist.

## Claims

1. Safety valve for releasing a fluid in case of fire, comprising a flap (12) in a body (10) for opening and closing a pipe, a first spring (14) maintained under tension against means sensitive to heat (15) for releasing the flap (12) when the tension is released by the sensitive means, **characterised in that** the sensitive means comprise a piston (151) acting on the first spring (14), a sensitive duct (153) being connected to a chamber (152) defined in the body (10) by the piston (151) opposite to the first spring (14), the duct (153) and the chamber (152) containing a control fluid at a predetermined pressure in order for the piston (151) to maintain the first spring (14) under tension, the duct (153) being made of a material suitable for melting at a predetermined temperature in such a way as to release the fluid in the case of a fire around the duct (153).

2. Safety valve according to claim 1, wherein the piston (151) acts on the first spring (14) via a cup (157) and a second spring (156), the cup (157) being stopped against a shoulder (101) of the body (10) in order to maintain the first spring (14) at a calibrated tension.

3. Safety valve according to claim 2, wherein the second spring (156) is dimensioned in order for the control fluid in the duct (153) to be at the predetermined pressure.

4. Valve according to one of the previous claims, **characterised in that** it is a safety valve under pressure.

5. Safety valve according to claim 4, wherein the cup (157) comprises means (158) for adjusting the compression of the first spring (14).

6. Safety valve according to claim 1, wherein the piston (151) acts directly on the first spring (14).

7. Safety valve according to claim 6, wherein the first spring (14) and the surface of the piston (151) are dimensioned in order for the control fluid in the duct (153) to be at the predetermined pressure.

8. Safety valve according to one of the previous claims, wherein the duct (153) comprises a filling valve (155).

9. Safety valve according to one of the previous claims, wherein the duct (153) is made of a thermoplastic synthetic material.

10. Tank for pressurised fluid, **characterised in that** it comprises a safety valve (1) according to one of the previous claims, the flap (12) being maintained closed by the first spring (14), the duct (153) being positioned along the tank.
